# EUROPEAN PATENT APPLICATION

(11) **EP 3 716 186 A1**
(43) Date of publication of application: **30.09.2020**
(21) Application number: 19819842.6
(22) Date of filing: 14.03.2019
(51) Int. Cl.: G06Q 20/38

(54) **PAYMENT PROCESSING METHOD AND APPARATUS, AND SERVER**

(30) Priority: 12.06.2018 CN 201810599899
(71) Applicant: ALIBABA GROUP HOLDING LIMITED, George Town, Grand Cayman (KY)
(72) Inventor: ZHANG, Huacheng, Hangzhou, Zhejiang 311121 (CN)
(74) Representative: Goddar, Heinz J.
(86) International application number: PCT/CN2019/078086
(87) International publication number: WO 2019/237779

(57) **Abstract**

Implementations of the present specification provide a payment processing method, apparatus, and server. A user can preconfigure payment authorization information for the user or another person, and deliver the payment authorization information to a payment server for storage. In a payment process, a payment demander provides a payee with a payment account identifier and payment authorization information, and the payment server can determine, based on this, whether to collect a payment from the payment service user. In the implementations, the payment demander can be a non-registered user, and can complete payment even if the payment demander does not carry a portable terminal device.

## Description

The present specification relates to the field of Internet technologies, and in particular, to payment processing methods, apparatuses, and servers.

### BACKGROUND

With the development of Internet technologies and terminal technologies, mobile payment has become a common payment method in people's daily life. A user can register a payment account on a mobile payment platform, and use a portable terminal device such as a smartphone to install an application (APP) with a payment function. When the user performs payment, the APP can display a payment code, so that the payment is completed after a scanning device of a payee scans the payment code. Based on this, a more convenient payment processing solution needs to be provided.

### SUMMARY

To alleviate a problem in a related technology, implementations of the present specification provide payment processing methods, apparatuses, and servers.

According to a first aspect of the implementations of the present specification, a payment processing method is provided, where the method includes: initiating, by a payee, a collection request to a payment server, where the collection request includes a payment account identifier and payment authorization information that are provided by a payment demander; and searching, by using the payment account identifier, for payment authorization information preconfigured by a payment service user, and after the searching, determining, by the payment server, whether the found payment authorization information matches the payment authorization information included in the collection request, and determining, based on a determining result, whether to collect a payment from the payment service user.

Optionally, the payment authorization information preconfigured by the payment service user includes a specified image and information of password locations in the specified image.

Optionally, the information of the password locations includes one or more types of the following information: pixel information corresponding to password locations, information about a sequence of the password locations, or information about a track of displacements each specifying a displacement from a password location to another password location.

Optionally, the payment authorization information included in the collection request includes an image photographed by the payee and location information triggered by the payment demander in the photographed image.

Optionally, whether the found payment authorization information matches the payment authorization information included in the collection request is determined based on whether the photographed image matches the specified image and whether the triggered location information matches the information of the password locations.

Optionally, the payment authorization information includes biometric identification information.

Optionally, the payment service user is different from the payment demander, or the payment service user is the same as the payment demander.

Optionally, whether to collect a payment from the payment service user is further determined based on one or more types of the following information: a collection amount, a geographic location at which the collection request is initiated, a collection time, or user information of the payee.

Optionally, the method further includes: pushing, by the payment server, a collection notification to the payment service user.

According to a second aspect of the implementations of the present specification, a payment processing method is provided, where the method includes: receiving a collection request initiated by a payee, where the collection request includes a payment account identifier and payment authorization information that are provided by a payment demander; and searching, by using the payment account identifier, for payment authorization information preconfigured by a payment service user, and after the searching, determining whether the found payment authorization information matches the payment authorization information included in the collection request, and determining, based on a determining result, whether to collect a payment from the payment service user.

Optionally, the payment authorization information preconfigured by the payment service user includes a specified image and information of password locations in the specified image.

Optionally, the information of the password locations includes one or more types of the following information: pixel information corresponding to password locations, information about a sequence of the password locations, or information about a track of displacements each specifying a displacement from a password location to another password location.

Optionally, the payment authorization information included in the collection request includes an image photographed by the payee and location information triggered by the payment demander in the photographed image.

Optionally, whether the found payment authorization information matches the payment authorization information included in the collection request is determined based on whether the photographed image matches the specified image and whether the triggered location information matches the information of the password locations.

Optionally, the preconfigured payment authorization information or the payment authorization information included in the collection request includes biometric identification information.

Optionally, the payment service user is different from the payment demander, or the payment service user is the same as the payment demander.

Optionally, whether to collect a payment from the payment service user is further determined based on one or more types of the following information: a collection amount, a geographic location at which the collection request is initiated, a collection time, or user information of the payee.

Optionally, the method further includes: pushing a collection notification to the payment service user.

According to a third aspect of the implementations of the present specification, a payment processing apparatus is provided, where the apparatus includes: a receiving module, configured to receive a collection request initiated by a payee, where the collection request includes a payment account identifier and payment authorization information that are provided by a payment demander; and a determining module, configured to: after payment authorization information preconfigured by a payment service user is searched for by using the payment account identifier, determine whether the found payment authorization information matches the payment authorization information included in the collection request, and determine, based on a determining result, whether to collect a payment from the payment service user.

Optionally, the payment authorization information preconfigured by the payment service user includes a specified image and information of password locations in the specified image.

Optionally, the payment authorization information included in the collection request includes an image photographed by the payee and location information triggered by the payment demander in the photographed image.

Optionally, whether the found payment authorization information matches the payment authorization information included in the collection request is determined based on whether the photographed image matches the specified image and whether the triggered location information matches the information of the password locations.

Optionally, the preconfigured payment authorization information or the payment authorization information included in the collection request includes biometric identification information of the payment demander.

Optionally, the payment service user is different from the payment demander, or the payment service user is the same as the payment demander.

Optionally, whether to collect a payment from the payment service user is further determined based on one or more types of the following information: a collection amount, a geographic location at which the collection request is initiated, a collection time, or user information of the payee.

Optionally, the apparatus further includes: a push module, configured to push a collection notification to the payment service user.

According to a fourth aspect of the implementations of the present specification, a server is provided, where the server includes: a processor; and a memory, configured to store a processor-executable instruction, where the processor is configured to: receive a collection request initiated by a payee, where the collection request includes a payment account identifier and payment authorization information that are provided by a payment demander; and searching, by using the payment account identifier, for payment authorization information preconfigured by a payment service user, and after the searching, determine whether the found payment authorization information matches the payment authorization information included in the collection request, and determine, based on a determining result, whether to collect a payment from the payment service user.

The technical solutions provided in the implementations of the present specification can achieve the following beneficial effects:

In the implementations of the present specification, a user can preconfigure payment authorization information for the user or another person, and deliver the payment authorization information to a payment server for storage. In a payment process, a payment demander provides a payee with a payment account identifier and payment authorization information, and the payment server can determine, based on this, whether to collect a payment from the payment service user. In the implementations, the payment demander can be a non-registered user, and can complete payment even if the payment demander does not carry a portable terminal device.

It is worthwhile to understand that the previous general description and the following detailed description are merely examples and explanations, and cannot limit the present specification.

### BRIEF DESCRIPTION OF DRAWINGS

The accompanying drawings here are incorporated into the present specification and constitute a part of the present specification, illustrate implementations consistent with the present specification, and serve to explain the principles of the present specification together with the present specification.
FIG. 1 is a schematic diagram illustrating a payment processing scenario, according to an example implementation of the present specification;
FIG. 2A is a schematic diagram illustrating an application scenario of a payment processing method, according to an example implementation of the present specification;
FIG. 2B is a schematic diagram illustrating information of password locations in a specified image, according to an example implementation of the present specification;
FIG. 2C is a flowchart illustrating a payment processing method, according to an example implementation of the present specification;
FIG. 3 is a flowchart illustrating another payment processing method, according to an example implementation of the present specification;
FIG. 4 is a structural diagram illustrating hardware of a server where a payment processing apparatus in the present specification is located;
FIG. 5 is a block diagram illustrating a payment processing apparatus, according to an example implementation of the present specification.

### DESCRIPTION OF IMPLEMENTATIONS

Example implementations are described in detail here, and examples of the implementations are presented in the accompanying drawings. When the following description relates to the accompanying drawings, same numbers in different accompanying drawings represent same or similar elements unless specified otherwise. Implementations described in the following example implementations do not represent all implementations consistent with the present specification. On the contrary, the implementations are only examples of apparatuses and methods that are described in the appended claims in detail and consistent with some aspects of the present specification.

The terms used in the present specification are merely used to describe specific implementations, and are not intended to limit the present specification. The terms "a" and "the" of singular forms used in the present specification and the appended claims are also intended to include plural forms, unless otherwise specified in the context clearly. It is worthwhile to further understand that the term "and/or" used in the present specification indicates and includes any or all possible combinations of one or more associated listed items.

It is worthwhile to understand that although terms such as "first", "second", and "third" may be used in the present specification to describe various types of information, the information is not limited to these terms. These terms are only used to distinguish between information of the same type. For example, without departing from the scope of the present specification, "first information" can also be referred to as "second information", and similarly, "second information" can also be referred to as "first information". Depending on the context, for example, the word "if" used here can be explained as "while", "when", or "in response to determining".

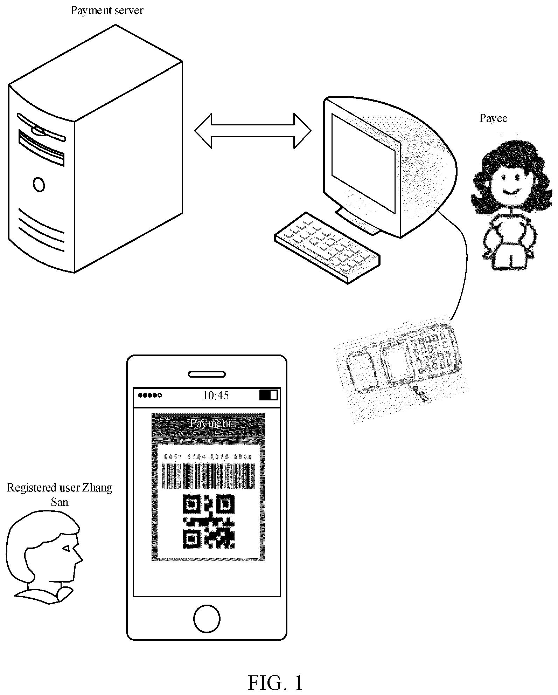

FIG. 1 is a schematic diagram illustrating a payment processing scenario, according to an example implementation of the present specification. An offline payment scenario is shown in FIG. 1, and includes a payment server, a user, and a payee. A portable terminal device held by the user is, for example, a smartphone. Zhang San is a registered user of the payment server, and can obtain a service such as payment, collection, or fund transfer provided by the payment server. In FIG. 1, the payee is, for example, a brick-and-mortar store. The store is also a registered user of the payment server, and can obtain a service such as payment, collection, or fund transfer provided by the payment server.

If the user Zhang San needs to pay for a product in the store when purchasing the product, Zhang San can initiate a collection request to the payment server by using a method, for example, using a payment APP installed in the smartphone to display a QR code including a payment credential, where the QR code is to be scanned by the store. In this case, the payment server collects a payment from the user, and then the payment server transfers the payment to an account of the store.

It can be determined from the previous payment scenario that, only a registered user of the payment server can obtain a payment service, and the user further needs to carry a portable terminal device to complete a payment process. Based on this, the implementations of the present specification provide a payment processing solution. A user can preconfigure payment authorization information for the user or another person, and deliver the payment authorization information to a payment server for storage. In a payment process, a payment demander provides a payee with a payment account identifier and payment authorization information, and the payment server can determine, based on this, whether to collect a payment from the payment service user. In the implementations, the payment demander can be a non-registered user, and can complete payment even if the payment demander does not carry a portable terminal device.

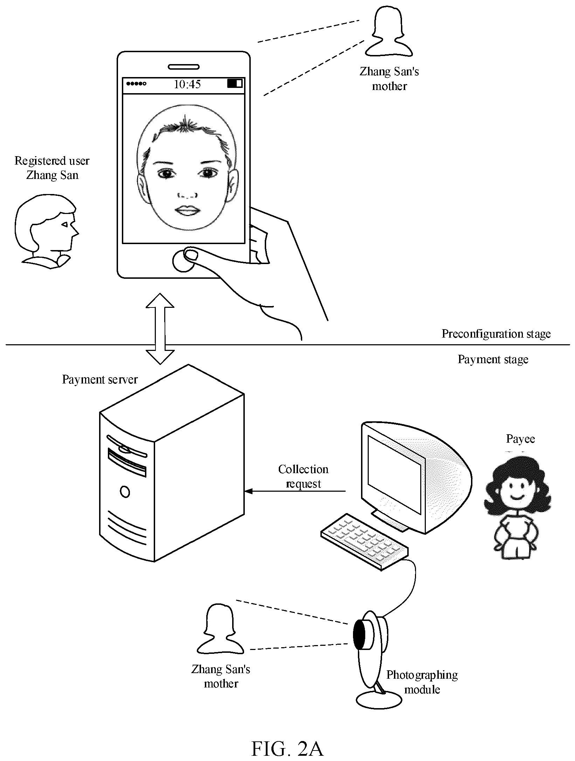

FIG. 2A is a schematic diagram illustrating another payment processing scenario, according to an example implementation of the implementations of the present specification. The implementation shown in FIG. 2A relates to the following two aspects:

### (1) A user preconfigures payment authorization information:

As shown in FIG. 2A, a user Zhang San is a registered user of a payment server. Zhang San authorizes Zhang San's mother to use an account of Zhang San to perform mobile payment, and Zhang San also authorizes to implement mobile payment without carrying a portable terminal device. Based on the solution in the implementations of this application, the user Zhang San can configure payment authorization information. The payment authorization information can be different from a payment password, and is sent to the payment server to indicate information that the payment server can deduct a payment from the account of the user when the user authorizes another person to perform payment or when the user does not carry a portable terminal device.

In practice, multiple types of payment authorization information can be selected. As an example, the payment authorization information can include biometric identification information, including but not limited to fingerprint information, iris information, face information, or voiceprint information. The biometric identification information can be biometric identification information of the user, or can be biometric identification information of another person entered by the user. Certainly, corresponding to the use of the biometric identification information, a device of a payee needs to have a function of collecting the biometric identification information.

In another example, the payment authorization information can further include a specified image and information of password locations in the specified image. The specified image can be uploaded by the user. Because the image may be copied, in this implementation, the user needs to configure a password location in the specified image to obtain the information of the password locations. As an example, the user can configure multiple password locations. Based on the password locations configured by the user in the image, one or more types of the following information of password locations can be obtained: pixel information corresponding to the password locations, a sequence of the password locations, or a track of displacements each specifying a displacement from a password location to another password location, to determine the information of the password locations.

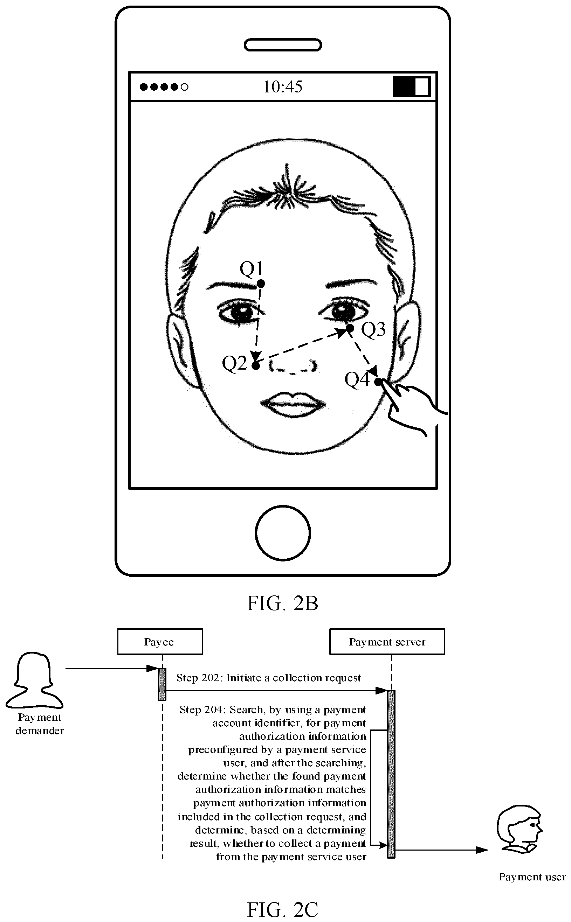

In FIG. 2A, the user Zhang San photographs a face image of Zhang San's mother as a specified image. FIG. 2B is a schematic diagram illustrating password location configuration, according to an example implementation of the present specification. The user Zhang San configures four password locations in the image. In FIG. 2B, points Q1 to Q4 are used as an example. A configuration process can be triggered by a finger of the user on a touchscreen. The device can detect touch locations of the finger of the user on the touchscreen, and the touchscreen displays the image. Therefore, the password locations in the image can be determined based on the touch locations.

Based on this, pixel information is determined by obtaining the information of the password locations. For example, the four password locations, namely, points Q1 to Q4, respectively correspond to one or more pixels. The pixel information can include but is not limited to a pixel value, brightness, gradient, grayscale, etc. In practice, the pixel information can be flexibly configured based on an image recognition technology. Optionally, when there are multiple password locations, a sequence of the password locations can be further obtained as one type of information of password locations.

FIG. 2B further shows a sequence of the four password locations and tracks between the password locations by using dashed lines. Optionally, when there are multiple password locations, a track of displacements each specifying a displacement from a password location to another password location can be further obtained as one type of information of password locations.

Optionally, the user Zhang San can further set more specified images and password locations. For example, Zhang San can further photograph an image of own palm or another item as another specified image, and correspondingly configure a password location.

In practice, the payment server can implement the configuration process by using an application. The application can be installed in a personal device of the user. The application can provide a configuration interface for the payment authorization information, and receive, by using the interface, the payment authorization information configured by the user, and then the application sends the payment authorization information to the server for storage.

Optionally, in practice, based on more strict security considerations, the user can configure more limitation information, so that the payment server can determine, with reference to more factors, whether to deduct a payment. The following examples are provided:

In consideration of a collection amount, collection of a relatively large amount can be limited. Therefore, the user can configure a payable amount range.

In consideration of active time, payment time can be set. Therefore, a time range of such payment processing can be limited. For example, such payment processing can be performed only on weekends, weekdays, or daytime.

In consideration of a geographic location of user residence, a geographic location range of payment can be set. For example, payment can be performed only within a city of user residence.

In consideration of consumption habits of the user, payee information can be set. For example, only some payees (convenience stores, supermarkets, etc.) can be allowed to perform collection.

### (2) Payment stage.

The payment stage is described with reference to FIG. 2C. FIG. 2C is a schematic diagram illustrating a payment processing method, according to an example implementation of the present specification. In this implementation, a payee and a payment server cooperate with each other to perform the following process:

Step 202: The payee initiates a collection request to the payment server, where the collection request includes a payment account identifier and payment authorization information that are provided by a payment demander.

Step 204: The payment server searches, by using the payment account identifier, for payment authorization information preconfigured by a payment service user, and after the searching, the payment server determines whether the found payment authorization information matches the payment authorization information included in the collection request, and determines, based on a determining result, whether to collect a payment from the payment service user.

With reference to FIG. 2A, when the payment demander (Zhang San's mother) purchases a product in an online store, and Zhang San's mother requests that the product can be paid by Zhang San, Zhang San's mother can provide the payee with a payment account identifier and payment authorization information. In this implementation, the payment service user (Zhang San) is different from the payment demander (Zhang San's mother). In another example, the payment service user can be the same as the payment demander, that is, Zhang San can also complete payment by using the payment processing method in this implementation.

The payment account identifier is used by the payment server to identify a registered user whom the payment demander requests to perform payment. Therefore, the payment account identifier can be one or more types of network identity identifiers that can uniquely identify the user, such as a mobile number, an ID card number, or an account name, so that the payment server can find the specific user. Optionally, in practice, the payment demander can notify the payee of the payment account identifier, and the payee enters the payment account identifier into the device. Based on a more secure consideration, the payment demander can enter the payment account identifier by using the device of the payee. In this process, the payment demander can use multiple methods such as blocking to prevent another person from peeping the payment account identifier, and the device of the payee can also use some security mechanisms such as encryption to prevent the payment account identifier from being explicitly displayed and enable the payment account identifier to be encrypted for storage or sending.

In addition, the payment demander further needs to provide the payment authorization information, so that the payment server determines whether the payment demander is a party pre-authorized by the registered user. If the payment authorization information includes biometric identification information, the device of the payee can collect biometric identification information of the payment demander. Optionally, the device of the payee can also use some security mechanisms such as encryption to encrypt the biometric identification information for storage or sending.

If the payment authorization information includes a specified image and information of password locations, the device of the payee can be used to photograph an image. Optionally, for example, in FIG. 2A, the device of the payee photographs a face image of Zhang San's mother. In another example, Zhang San's mother can carry a device storing own face image, and Zhang San's mother displays the image, so that the device of the payee photographs the image displayed on the device as a specified image. It can be understood that, if Zhang San preconfigures an image of own palm as a specified image, Zhang San can also be a payment demander, and the device of the payee photographs the image of the palm of Zhang San.

After the image is photographed, the payment demander needs to configure location information in the photographed image. As an example, the device of the payee has a touchscreen, and the payment demander can touch the photographed image, so that the device of the payee can obtain a location triggered by the payment demander in the photographed image, and then determine the location information. In practice, the payment demander can use multiple methods such as blocking to prevent another person from peeping the trigged location information, and the device of the payee can also use some security mechanisms such as encryption to encrypt the trigged location information for storage or other processing.

Then, the device of the payee can send the collection request that includes the payment account identifier and the payment authorization information to the payment server. The payment server can find the payment service user by using the payment account identifier, and find the payment authorization information preconfigured by the payment service user; and then determine whether the found payment authorization information matches the payment authorization information included in the collection request, and determine, based on a determining result, whether to collect a payment from the payment service user.

As an example, if the payment authorization information is biometric identification information, the preconfigured payment authorization information is compared with the payment authorization information included in the collection request, to determine whether the preconfigured payment authorization information is the same as the payment authorization information included in the collection request. If the payment authorization information is a specified image and information of password locations, an image recognition algorithm can be used. First, whether the photographed image matches the specified image is determined. Whether the photographed image matches the specified image can be determined based on similarity between the two images, which can be specifically implemented by using an existing image recognition method. This implementation imposes no limitation thereto. Then, whether the triggered location information matches the preconfigured information of password locations is determined. For example, whether the triggered location information matches the preconfigured information of password locations can be determined based on one or more factors such as pixel information, a sequence of password locations, or a track of displacements each specifying a displacement from a password location to another password location.

Optionally, a collection request can further include other information, such as request time, user information of the payee, a collection amount, and a geographic location at which the collection request is initiated. The payment server can further determine whether to perform collection with reference to limitation information pre-configured by the payment service user. In practice, the payment server can further flexibly configure other more risk control policies as needed, and finally determine, based on one or more factors, whether to deduct a payment from the user.

Optionally, before or after the payment server deducts a payment from the payment service user, the payment server can further push a collection notification to the payment service user. A specific push method can be multiple methods such as sending a short message, sending an email, pushing a message in an application, and making a call. This implementation imposes no limitation thereto.

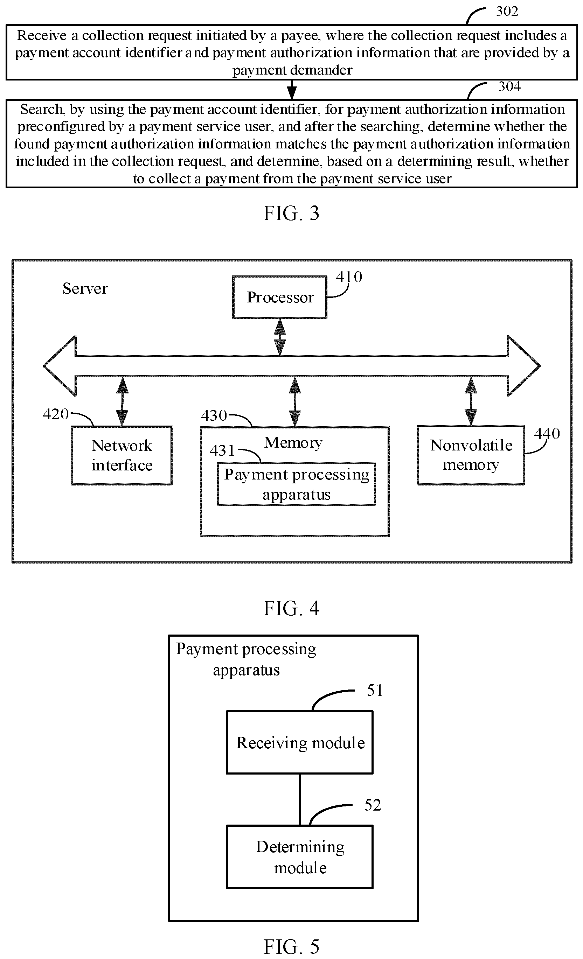

FIG. 3 is a flowchart illustrating another payment processing method, according to an example implementation of the present specification. In this implementation, a payment processing solution is described from a perspective of a payment server. The method includes the following steps:

Step 302: Receive a collection request initiated by a payee, where the collection request includes a payment account identifier and payment authorization information that are provided by a payment demander.

Step 304: Search, by using the payment account identifier, for payment authorization information preconfigured by a payment service user, and after the searching, determine whether the found payment authorization information matches the payment authorization information included in the collection request, and determine, based on a determining result, whether to collect a payment from the payment service user.

Optionally, the payment authorization information preconfigured by the payment service user includes a specified image and information of password locations in the specified image.

Optionally, the information of the password locations includes one or more types of the following information: pixel information corresponding to password locations, information about a sequence of the password locations, or information about a track of displacements each specifying a displacement from a password location to another password location.

Optionally, the payment authorization information included in the collection request includes an image photographed by the payee and location information triggered by the payment demander in the photographed image.

Optionally, whether the found payment authorization information matches the payment authorization information included in the collection request is determined based on whether the photographed image matches the specified image and whether the triggered location information matches the information of the password locations.

Optionally, the preconfigured payment authorization information or the payment authorization information included in the collection request includes biometric identification information.

Optionally, the payment service user is different from the payment demander, or the payment service user is the same as the payment demander.

Optionally, whether to collect a payment from the payment service user is further determined based on one or more types of the following information: a collection amount, a geographic location at which the collection request is initiated, a collection time, or user information of the payee.

Optionally, the method further includes: pushing a collection notification to the payment service user.

Corresponding to the previous implementations of the payment processing method, the present specification further provides implementations of a payment processing apparatus and implementations of a terminal device that the payment processing apparatus is applied to.

The implementation of the payment processing apparatus in the present specification can be applied to a device such as a server. The apparatus implementation can be implemented by software, hardware, or a combination of hardware and software. Software implementation is used as an example. As a logical apparatus, the apparatus is formed by reading a corresponding computer program instruction from a nonvolatile memory to a memory by a processor of the device where the apparatus is located. In terms of hardware, FIG. 4 is a structural diagram illustrating hardware of a server where a payment processing apparatus in the present specification is located. In addition to a processor 410, a memory 430, a network interface 420, and a nonvolatile memory 440 that are shown in FIG. 4, the server where the apparatus 431 is located in this implementation usually can further include other hardware based on an actual function of the server. Details are omitted here for simplicity.

FIG. 5 is a block diagram illustrating a payment processing apparatus, according to an example implementation of the present specification. The apparatus includes: a receiving module 51, configured to receive a collection request initiated by a payee, where the collection request includes a payment account identifier and payment authorization information that are provided by a payment demander; and a determining module 52, configured to: after payment authorization information preconfigured by a payment service user is searched for by using the payment account identifier, determine whether the found payment authorization information matches the payment authorization information included in the collection request, and determine, based on a determining result, whether to collect a payment from the payment service user.

Optionally, the payment authorization information preconfigured by the payment service user includes a specified image and information of password locations in the specified image.

Optionally, the information of the password locations includes one or more types of the following information: pixel information corresponding to password locations, information about a sequence of the password locations, or information about a track of displacements each specifying a displacement from a password location to another password location.

Optionally, the payment authorization information included in the collection request includes an image photographed by the payee and location information triggered by the payment demander in the photographed image.

Optionally, whether the found payment authorization information matches the payment authorization information included in the collection request is determined based on whether the photographed image matches the specified image and whether the triggered location information matches the information of the password locations.

Optionally, the preconfigured payment authorization information or the payment authorization information included in the collection request includes biometric identification information of the payment demander.

Optionally, the payment service user is different from the payment demander, or the payment service user is the same as the payment demander.

Optionally, whether to collect a payment from the payment service user is further determined based on one or more types of the following information: a collection amount, a geographic location at which the collection request is initiated, a collection time, or user information of the payee.

Optionally, the apparatus further includes: a push module, configured to push a collection notification to the payment service user.

Correspondingly, the present specification further provides a server. The server includes: a processor; and a memory, configured to store a processor-executable instruction. The processor is configured to: receive a collection request initiated by a payee, where the collection request includes a payment account identifier and payment authorization information that are provided by a payment demander; and search, by using the payment account identifier, for payment authorization information preconfigured by a payment service user, and after the searching, determine whether the found payment authorization information matches the payment authorization information included in the collection request, and determine, based on a determining result, whether to collect a payment from the payment service user.

For a specific implementation process of functions of each module in the previous payment processing apparatus, references can be made to an implementation process of a corresponding step in the previous payment processing method. Details are omitted here for simplicity.

Because an apparatus implementation basically corresponds to a method implementation, for related parts, references can be made to some descriptions in the method implementation. The previously described apparatus implementations are merely examples. The modules described as separate parts can or cannot be physically separate, and parts displayed as modules can or does not have to be physical modules, that is, can be located in one place, or can be distributed on a plurality of network modules. Some or all of the modules can be selected based on actual needs to achieve the objectives of the solutions of the present specification. A person of ordinary skill in the art can understand and implement the implementations of the present specification without creative efforts.

Specific implementations of the present specification are described above. Other implementations fall within the scope of the appended claims. In some situations, the actions or steps described in the claims can be performed in an order different from the order in the implementations and the desired results can still be achieved. In addition, the process depicted in the accompanying drawings does not necessarily need the shown particular execution to achieve the desired results. In some implementations, multi-tasking and parallel processing can be or may be advantageous.

A person skilled in the art can easily figure out other implementations of the present specification after thinking over the present specification and practicing the present specification that is applied for here. The present specification is intended to cover any variations, uses, or adaptations of the present specification, and these variations, uses, or adaptations follow the general principles of the present specification and include common knowledge or conventional techniques that are not applied for in the technical field of the present specification. The present specification and the implementations are merely considered as examples, and the actual scope and the spirit of the present specification are pointed out by the following claims.

It should be understood that the present specification is not limited to the previously described precise structures shown in the accompanying drawings, and various modifications and changes can be made without departing from the scope of the present specification. The scope of the present specification is limited by the appended claims only.

The previous descriptions are merely preferred implementations of the present specification, but are not intended to limit the present specification. Any modification, equivalent replacement, improvement, etc. made without departing from the spirit and principle of the present specification shall fall within the protection scope of the present specification.

## Claims

1. A payment processing method, comprising:
initiating, by a payee, a collection request to a payment server, wherein the collection request comprises a payment account identifier and payment authorization information that are provided by a payment demander; and
searching, by the payment server by using the payment account identifier, for payment authorization information preconfigured by a payment service user, and after the searching, determining, by the payment server, whether the found payment authorization information matches the payment authorization information comprised in the collection request, and determining, based on a determining result, whether to collect a payment from the payment service user.

2. The method according to claim 1, wherein the payment authorization information preconfigured by the payment service user comprises a specified image and information of password locations in the specified image.

3. The method according to claim 2, wherein the information of the password locations comprises one or more types of the following information: pixel information corresponding to password locations, information about a sequence of the password locations, or information about a track of displacements each specifying a displacement from a password location to another password location.

4. The method according to claim 2, wherein the payment authorization information comprised in the collection request comprises an image photographed by the payee and location information triggered by the payment demander in the photographed image.

5. The method according to claim 4, wherein whether the found payment authorization information matches the payment authorization information comprised in the collection request is determined based on whether the photographed image matches the specified image and whether the triggered location information matches the information of the password locations.

6. The method according to claim 1 or 2, wherein the preconfigured payment authorization information or the payment authorization information comprised in the collection request comprises biometric identification information.

7. The method according to claim 1, wherein the payment service user is different from the payment demander, or the payment service user is the same as the payment demander.

8. The method according to claim 1, wherein whether to collect a payment from the payment service user is further determined based on one or more types of the following information: a collection amount, a geographic location at which the collection request is initiated, a collection time, or user information of the payee.

9. The method according to claim 1, further comprising: pushing, by the payment server, a collection notification to the payment service user.

10. A payment processing method, comprising:
receiving a collection request initiated by a payee, wherein the collection request comprises a payment account identifier and payment authorization information that are provided by a payment demander; and
searching, by using the payment account identifier, for payment authorization information preconfigured by a payment service user, and after the searching, determining whether the found payment authorization information matches the payment authorization information comprised in the collection request, and determining, based on a determining result, whether to collect a payment from the payment service user.

11. The method according to claim 10, wherein the payment authorization information preconfigured by the payment service user comprises a specified image and information of password locations in the specified image.

12. The method according to claim 11, wherein the information of the password locations comprises one or more types of the following information: pixel information corresponding to password locations, information about a sequence of the password locations, or information about a track of displacements each specifying a displacement from a password location to another password location.

13. The method according to claim 11, wherein the payment authorization information comprises an image photographed by the payee and location information triggered by the payment demander in the photographed image.

14. The method according to claim 13, wherein whether the found payment authorization information matches the payment authorization information comprised in the collection request is determined based on whether the photographed image matches the specified image and whether the triggered location information matches the information of the password locations.

15. The method according to claim 10 or 11, wherein the preconfigured payment authorization information or the payment authorization information comprised in the collection request comprises biometric identification information.

16. The method according to claim 10, wherein the payment service user is different from the payment demander, or the payment service user is the same as the payment demander.

17. The method according to claim 10, wherein whether to collect a payment from the payment service user is further determined based on one or more types of the following information: a collection amount, a geographic location at which the collection request is initiated, a collection time, or user information of the payee.

18. The method according to claim 10, further comprising: pushing a collection notification to the payment service user.

19. A payment processing apparatus, comprising:
a receiving module, configured to receive a collection request initiated by a payee, wherein the collection request comprises a payment account identifier and payment authorization information that are provided by a payment demander; and
a determining module, configured to: after payment authorization information preconfigured by a payment service user is searched for by using the payment account identifier, determine whether the found payment authorization information matches the payment authorization information comprised in the collection request, and determine, based on a determining result, whether to collect a payment from the payment service user.

20. A server, comprising:
a processor; and
a memory, configured to store a processor-executable instruction, wherein
the processor is configured to:
receive a collection request initiated by a payee, wherein the collection request comprises a payment account identifier and payment authorization information that are provided by a payment demander; and
search, by using the payment account identifier, for payment authorization information preconfigured by a payment service user, and after the searching, determine whether the found payment authorization information matches the payment authorization information comprised in the collection request, and determine, based on a determining result, whether to collect a payment from the payment service user.
